# EUROPEAN PATENT APPLICATION

(11) **EP 2 426 829 A1**
(43) Date of publication of application: **07.03.2012**
(21) Application number: 10290465.3
(22) Date of filing: 01.09.2010
(51) Int. Cl.: H04B 7/02, H04W 72/12

(54) **Method for operating a base station of a wireless communication network and base station of a wireless communication network**

(71) Applicant: Alcatel Lucent, 75007 Paris (FR)
(72) Inventor: Aydin, Osman, 70569 Stuttgart (DE); Braun, Volker, Dr., 70176 Stuttgart (DE); Zeller, Dietrich, 71067 Sindelfingen (DE)
(74) Representative: Dreiss

(57) **Abstract**

The present invention refers to a method (69) for operating a base station (13a) for coordinated multipoint transmission and/or reception (63) between multiple base stations (13) and a terminal (15) of a wireless communication network (11). This method (69) comprises transmitting traffic (57) to at least one further base station (13b) and/or receiving the traffic (57) from the further base station (13b). In order to improve the reliability and/or the throughput of transmissions performed according a coordinated multipoint transmission and/or reception scheme, it is suggested that the method further comprise determining (59) at least one performance parameter (L, RTT, rl, ql) of said traffic (57).

## Description

### Specification

### Field of the invention

The present invention refers to a method for operating a base station for coordinated multipoint transmission and/or reception between multiple base stations and a terminal of a wireless communication network. Furthermore, the present invention refers to a base station arranged for coordinated multipoint transmission and/or reception between multiple base stations and a terminal of a wireless communication network.

### Background

Coordinated multipoint transmission and/or reception schemes are known in the art. When applying a coordinated multipoint transmission or reception scheme, operations of base stations of a wireless communication network that are performed during data transmissions over a radio link between the base stations and one or more terminals of the wireless network are coordinated with respect to each other. Coordinating the operation of multiple base stations, preferably multiple neighbouring base stations, allows for using the radio link more efficiently. In particular, throughput at cell edges can be improved. In other words, coordinated multipoint transmission and the reception improve the coverage of high data rates.

However, coordination the base stations with respect to each other requires information to be exchanged between these base stations. Thus, the base stations must be interconnected in such a way that data packets can be transferred between the base stations with a comparatively high reliability. In addition, rather stringent requirements concerning a latency of transmission of the data packets between the base stations must be complied with. If the base stations are not interconnected to each other well enough then the transmission between the base stations and the terminal may not be correctly coordinated and transmission errors may occur.

### Summary

The object of the present invention is to provide a method for operating a base station and a base station that allow for improving the reliability and/or the throughput of transmissions performed according to a coordinated multipoint transmission and/or reception scheme.

A first solution of this object consists in a method for operating a base station for coordinated multipoint transmission and/or reception between multiple base stations and at least one terminal of a wireless communication network, said method comprising transmitting traffic to at least one further base station and/or receiving the traffic from the further base station, wherein the method further comprises determining at least one performance parameter of said traffic. By determining the at least one performance parameter a quality of an interconnection between the base stations is monitored. This monitoring allows for detecting problems concerning the interconnection between the base stations and therefore avoiding transmission errors of transmissions over a radio link between the base stations and the terminal caused by an insufficient quality of the interconnection between the base stations. Therefore, the reliability and/or the throughput of the coordinated multipoint transmission and/or reception between the base stations and the terminal can be improved by this method.

Preferably, determining the at least one performance parameter comprises measuring a transmission latency, a transmission round trip time, a loss ratio and/or a loss rate of protocol data units of said traffic. The loss ratio corresponds to a ratio of a number of lost packets to a total number of transmitted packets. The loss rate corresponds to the number of lost packets per time unit. Both loss ratio and loss rate may be measured by using time stamps and/or sequence numbers. For instance, if the transmission latency or the transmission round trip time of packets exchanged between the base station and the further base station is comparatively high then the base stations can not be coordinated quickly. As a consequence, coordinated multipoint transmission and/or reception schemes operating at a comparatively short time scale can not be applied in this case. The loss ratio and/or the loss rate of the protocol data units exchanged between the base station and the further base station indicate a load of the interconnection between the base stations. A comparatively high value of the loss ratio and/or the loss rate indicates a high load of the interconnection between the base stations.

In an embodiment, the method comprises deciding depending on the performance parameter whether the further base station is suitable for coordinated multipoint transmission.

In an embodiment, there are multiple types of coordinated multipoint transmission and/or reception schemes. According to a first type of coordinated multipoint transmission and/or reception schemes, the base station and the at least one further base station coordinate resource allocation only, whereas the data transmission between the base station and the terminal is a point-to-point transmission. This type of coordinated multipoint transmission schemes requires a low latency in the connection between the base stations. Therefore, only low bitrates are required on the interconnection between the base stations.

Accordingly, in an embodiment the method comprises deciding depending on the performance parameter, preferably depending on the transmission latency and/or the round trip time, whether the further base station is suitable for coordinated resource allocation, preferably coordinated scheduling and/or coordinated beamforming. In an embodiment, said deciding comprises determining that the further base station is suitable for coordinated resource allocation if the performance parameter is within a first range and/or less than a first critical value. Otherwise the method may determine that the further base station is not suitable for coordinated resource allocation.

According to another type of coordinated multipoint transmission and/or reception schemes not only resource allocation is coordinated but also transmissions between the base stations and the terminal are point-to-multipoint transmissions, i.e., multiple base stations may send a piece of data simultaneously to a single terminal and/or a piece of data sent by a single terminal may be received simultaneously by multiple base stations. This type of coordinated multipoint transmission scheme requires the piece of data be transferred between the base station and the at least one further base station. Therefore, both low latency and a comparatively high bit rate on the interconnection between the base station is required.

Accordingly, in an embodiment the method comprises deciding depending on the performance parameter whether the further base station is suitable for simultaneous transmissions from the base station and the further base station to the terminal. Said simultaneous transmissions include downlink transmissions from multiple base stations to a single terminal and uplink transmissions from a single terminal to multiple base stations. In an embodiment said deciding comprises determining that the further base station is suitable for simultaneous transmissions if the at least one performance parameter is within a second range or less than a second critical value. Otherwise, the method may decide that the further base station is not suitable for simultaneous transmissions.

For determining the performance parameter already existing traffic between the base station and the further base station can be considered. However, in some cases, e.g., when initiating a coordinated multipoint transmission, there is no traffic or no sufficient traffic between the base station and a further base station and the performance parameter can not be determined. Therefore, an embodiment is suggested, wherein transmitting and/or receiving the traffic comprises transmitting and/or receiving at least one test protocol data unit and wherein the performance parameter is determined for the transmitted and/or received test protocol data unit.

In an embodiment, the method comprises determining a cooperating set of further base stations cooperating for said coordinated multipoint transmission and/or reception by adding a candidate base station to the cooperating set depending on the performance parameter. Preferably, only those further base stations are included in the cooperating set, that are suitable for any type coordinated multipoint transmission schemes. For example, for each further base station the performance parameter may be determined and the further base station may be added to the cooperating set if the performance parameter is within the first range or less than the first critical value. Then, depending on the performance parameter related to the further base stations included in their cooperating set the method may determine which type coordinated multipoint transmission scheme shall be applied.

To this end, in an embodiment the performance parameter is determined before performing said coordinated multipoint transmission and/or the cooperating set is determined before performing said coordinated multipoint transmission. In an embodiment, the performance parameter is determined during said coordinated multipoint transmission and the method comprises removing a further base station from the cooperating set during said coordinated multipoint transmission depending on the performance parameter related to said further base station. For example, the further base station may be removed from the cooperating set if the performance parameter is out of a predefined range and/or less than or grater than a predefined critical value. This allows for adapting the cooperating set to a degradation of the quality of the interconnection between the base stations.

Preferably, the traffic is transmitted over an interconnection arrangement, preferably an interconnection network or an interconnection link, for interconnecting the base station and the further base stations. The interconnection arrangement may comprise a point-to-point link between the base station and one further base station. Moreover, the interconnection arrangement may comprise an interconnection network connecting the base station and multiple further base stations to each other. The interconnection network may be of any type, for example Ethernet, token ring, Passive Optical Network (PON), and the like. A transmission system of the interconnection link and/or the interconnection network may comprise an electrical link, an optical link and/or a radio link.

In an embodiment, the method comprises classifying the traffic into multiple service classes and determining the performance parameter for at least one service class. For example, DiffServ maybe applied and the traffic exchanged between the base station and the further base stations maybe classified by assigning a value to a DiffServ Code Point (DSCP) of the packets of the traffic, the value indicating the service class. In an embodiment, signalling traffic exchanged between the base station and the further base stations used for coordination of the base station is assigned to a first class and user data traffic originating from the terminal or destined to the terminal exchanged between the base station and the further base station is assigned to a second service class. The performance parameter can be determined for each service class separately.

Preferably, the method comprises classifying the test protocol data unit into one of said service classes and the performance parameter is determined for the transmitted and/or received test protocol data units. In other words, test traffic is generated separately for each class.

According to an embodiment, the method comprises transferring the at least one determined performance parameter to the further base station. Preferably, the performance parameter is transferred over the interconnection arrangement, e.g., the interconnection network or the interconnection link.

In an embodiment, the method may comprise receiving a request for determining the at least one performance parameter and determining the performance parameter upon receipt of the request. For instance, the request may be sent by the further base station in order to trigger determining the performance parameter.

According to a second solution of the above mentioned object, a base station of a wireless communication network arranged for coordinated multipoint transmission and/or reception between multiple base stations and a terminal of the wireless communication network is suggested, said base station comprising a transmitter for transmitting traffic to at least one further base station and/or a receiver for receiving the traffic from the further base station, wherein the base station is arranged for determining at least one performance parameter of said traffic. This base station has the above mentioned advantages of the method described above.

In an embodiment, the base station comprises control circuitry arranged for executing a method according to the present invention, embodiments of which are described above.

### Brief description of the figures

Preferred embodiments and further advantages of the present inventions are shown in the figures and described in detail hereinafter.
- Figure 1: shows a wireless communication network;
- Figure 2: shows a message sequence chart of a method for coordinated multipoint transmission;
- Figure 3: shows a flow chart of a method for operating a base station of the wireless network shown in Figure 1;
- Figure 4: shows a protocol stack of the base station shown in Figure 1; and
- Figure 5: shows a further protocol stack of the base station.

### Description of the embodiments

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

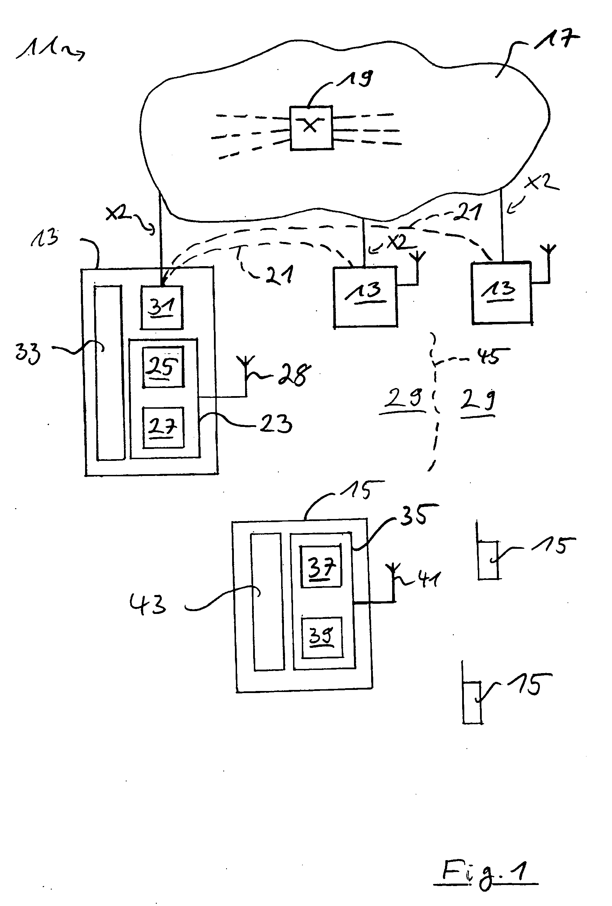

Figure 1 shows a wireless network 11 having multiple base stations 13 and multiple terminals 15. The base stations 13 are interconnected by means of an interconnection network 17. The interconnection network 17 is a switched network, such as a packet switched network, and therefore comprises at least one active network element such as a switch or an Internet Protocol (IP) router 19. In another embodiment, the interconnection network 17 is a Passive Optical Network (PON). In yet another embodiment, the base stations 13 are interconnected by means of interconnection links 21 which form point-to-point connections between the base stations 13.

The wireless network 11 may be a cellular network such as the Global System of Mobile Communications (GSM), the Universal Mobile Telecommunications System (UMTS), or the Long Term Evolution (LTE) system. In the shown embodiment, the network 11 is a LTE advanced network. Therefore, these base stations 13 are also referred to enhanced Node B (eNodeB) and the terminals 15 are also referred to as User Equipment (UE).

Each base station 13 comprises a first transceiver 23 having a first transmitter 25 and a first receiver 27. The first transmitter 25 and the first receiver 27 are coupled with a first antenna 28 of the base station 13. The first transmitter 25 is arranged for transmitting a radio signal over a radio cell 29 of the network 11 to at least one of the terminals 15. The first receiver 27 is arranged for receiving a radio signal transmitted by a terminal 15 over the radio cell 29.

Furthermore, each base station 13 comprises a fixed network interface arrangement 31 that is connected to the interconnection network 17 or the interconnection link 21.

Each base station 13 comprises first control circuitry 33 for controlling the base station 13, in particular the first transceiver 23 and the network interface 31. The first control circuitry 33 may comprise a processor programmed for executing a method for operating the base station 13.

Each terminal 15 comprises a second transceiver 35 having a second transmitter 37 and a second receiver 39. Both, the second transmitter and the second receiver are coupled with a second antenna 41 of the terminal 15. The second transmitter 37 is arranged for transmitting a radio signal via the second antenna 41 over the cell 29 to at least one of the base stations 13. The second receiver 39 is arranged for receiving a radio signal from the cell 29 from at least one base station 13 via the second antenna 41. In other words, the terminal 15 can communicate with the base stations 13.

Furthermore, each terminal 15 comprises second control circuitry 43 arranged for controlling the terminal 15, in particular the second transceiver 35. The second control circuitry 43 may comprise a processor programmed for executing a method for operating the terminal 15.

The network 11, in particular the base stations 13 and the terminals 15, are arranged for performing coordinated multipoint transmission and/or reception (CoMP). CoMP allows for improving the coverage of high data rates, the throughputs at an edge 45 of the cell 29 and/or for increasing the overall throughput of the network 11. When performing CoMP, transmission of data from the base stations 13 to the terminal 15 or reception of data from the terminals 15 by the base stations 13 is coordinated among multiple base stations 13. The network 11 may carry out CoMP according different types of CoMP schemes. For example, the network 11 may perform CoMP in the downlink (downlink CoMP). According to an exemplary type of downlink CoMP scheme, multiple base stations 13 coordinate the allocation of radio resources. The coordinated resource allocation may comprise coordinated scheduling and/or coordinated beamforming. The base stations 13 that participate in CoMP may allocate resources in their radio cells 29 such that radio interference is minimized and/or the throughput of the cells is maximized. In particular reducing the interference allows to improve a bitrate at the cell edge 45 between two neighbouring cells 29.

According to a further type of downlink CoMP schemes, joint signal processing and/or joint transmission of data from multiple base stations to a single terminal 15 is performed. Multiple base stations simultaneously transmit a radio signal destined to a single terminal 15 in order to improve the quality of the signal received by the terminal 15. When performing joint processing and/or joint transmission, the base stations 13 need to exchange payload data to be transmitted to the terminal 15, whereas when performing coordinated resource allocation, only signalling information must be exchanged between the base stations 13. As a consequence, joint processing and/or joint transmission requires more resources of the interconnection network 17 or the interconnection links 21 than coordinated resource allocation. When performing CoMP in the uplink (uplink CoMP) multiple base stations 13 simultaneously receive the signal sent by a single terminal 15. The base stations 13 exchange payload data contained in the received signal in order to reconstruct a complete piece of data sent by the terminal 15. Thus, uplink CoMP requires that the base station exchange both signalling information and payload data via the interconnection network 17 or the interconnection link 21.

In the shown embodiment, the base stations 13 use an extended version of the so called X2 interface of LTE. In LTE, the X2 interface allows for control handover procedures for a hand over of a terminal from one cell 29, i.e., one base station 13, to another cell 29, i.e., another base station 13. In order to perform a handover the base stations 13 may exchange signalling information. Furthermore, two base stations 13 involved in a handover procedure may establish a tunnel between them for tunnelling payload data from one base station 13 to the other base station 13 in order to perform a seamless handover.

In addition, in the shown embodiment the X2 interface allows for transferring signalling information related to CoMP between the base stations 13 and for transmitting payload data between the base station so that joint processing and/or joint transmission as well as uplink CoMP may be performed. Preferably, the payload data is transferred between the base stations 13 by tunnelling. To this end, the GPRS Tunnelling Protocol (GTP) may be applied.

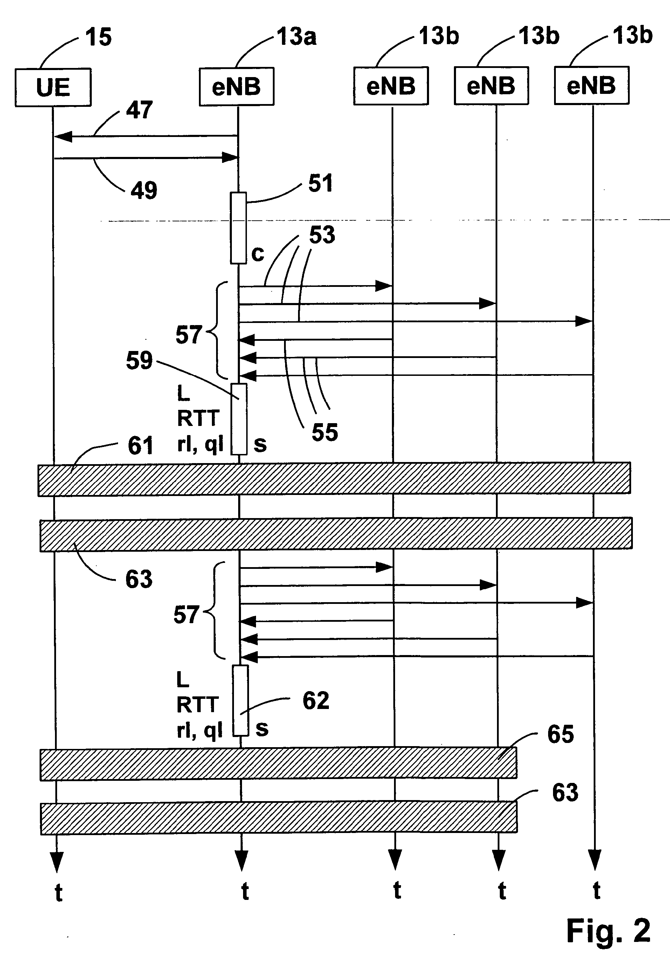

Figure 2 shows a message sequence chart of a CoMP between a terminal 15 and multiple base stations 13a, 13b. One base station is a master base station 13a which controls one or more slave base stations 13b. In the shown embodiment, the terminal 15 is registered with the master base station 13a, i.e., the master base station 13a may control the terminal 15.

At the beginning of the sequence shown in Figure 2 the master base station 13a sends a measurement configuration 47 to the terminal 15 in order to instruct the terminal 15 to perform radio measurements regarding neighbouring cells 29. After the terminal 15 has performed this measurement it sends a measurement report 49 back to the master base station 13a in order to communicate results of these measurements to the master base station 13a. Then the master base station 13a decides - preferably depending on the measurements contained in the measurement report 49 - whether to perform CoMP (Block 51).

In another embodiment, the terminal 15 may send the measurement report 49 without having received the measurement configuration 47 before. For instance, the terminal 15 may be configured to automatically report all relevant neighbor cells 29 and the corresponding neighbor base stations 13 to the master base station 13a. Relevant neighbor cells 29 may be those neighbor cells 29, a power of a signal received from a base station 13 of which (e.g. the Reference Signal Received Power, RSRP) is within a predefined range. In this embodiment, the master base station 13a needs not to request these measurement reports explicitly by sending the measurement configuration 47. Furthermore, the terminal 15 may be arranged for automatically sending the measurement report 49 if the RSRP of a neighbor cell 29 exceeds a predefined value, e.g., a handover margin value of approximately 1 to 3 dB.

In case that the master base station 13a has decided that CoMP shall be performed then it determines in block 51 a candidate set c of slave base stations 13b depending on the measurement results included in the measurement report 49. In the example shown in Figure 2, the candidate set c comprises the three slave base stations 13b depicted in Figure 2. Then the master base station 13a sends at least one test protocol data unit 53 to each slave base station 13b of the candidates set c. Each slave base station 13 b responds to the first test protocol data units 53 with a second test protocol data unit 55 which it sends back to the master base station 13a. As a consequence, traffic 57 is generated between the master base station 13a and each slave base station 13b. In the shown example, the traffic 57 consists of the test protocol data units 53, 55 only and is therefore pure test traffic. However, the traffic 57 may also comprise transmissions of signalling data and/or payload data between the base stations 13a, 13b that are performed for different purposes such as a different CoMP concerning a different terminal 15 or handover procedures concerning a different terminal 15.

In block 59, the master base station 13a determines at least one performance parameter of the traffic 57. The at least one performance parameter may comprise a transmission latency L between the master base station 13a and a certain slave base station 13b, a round trip time RTT between the master base station 13a and a certain slave base station 13b, a loss rate rl of protocol data units 53, 55 exchanged between the master base station 13a and one of the slave base stations 13b, and/or a loss ratio ql of these protocol data units. The performance parameters L, RTT, rl, ql may be determined for each slave base station 13b separately. In the shown example, three sets of performance parameters L, RTT, rl, ql are determined because there are three slave base stations 13b.

For measuring the transmission latency L time stamping may be applied, i.e., a base station 13a, 13b sending a protocol data unit may report and/or include a transmission time of the protocol data unit and a different base station 13a, 13b that receives this protocol data unit may report a reception time back to the base station 13a, 13b that has transmitted this protocol data unit. In addition, a base station 13a, 13b that transmits a protocol data unit may include a time stamp in the protocol data unit and the base station that receives this protocol data unit may attach a time stamp indicating the reception time to the content of the received protocol data unit and return the two time stamps to the base station 13a, 13b that has transmitted the protocol data unit. This allows for measuring both the one-way transmission latency L as well as the round trip time RTT. For measuring the loss rate rl and/or the loss ratio ql sequence numbers and/or time stamps may be included in the protocol data units 53, 55 of the traffic 57 so that packet loss may detected.

Depending on the determined performance parameters L, RTT, rl, ql, the master base station 13a determines in block 59 a cooperating set s of slave base stations 13b that shall participate in the CoMP. In the shown example, the cooperating set s comprises all depicted slave base stations 13b. Furthermore, block 59 may decide which type of CoMP (downlink CoMP with coordinated resource allocation, downlink CoMP with joint processing and/or transmission, uplink CoMP) shall be applied. In addition, block 59 may decide not to use CoMP at all and to continue using normal communication between the terminal 15 and the master base station 13a.

In a section 61, the master base station 13a configures CoMP according to the CoMP type determined in block 59. Section 61 comprises signalling between the master base station 13a and the slave base stations 13b of the cooperating set s. Signalling is performed over the X2 interface and transmitted via the interconnection network 17 or the interconnection links 21. Section 61 may also include exchange of signalling information with the terminal 15 in order to inform the terminal 15 that it shall receive data from multiple base stations 13a, 13b.

Then CoMP is performed in a section 63. While performing CoMP the master base station 13a may once or repeatedly verify the quality of the interconnection between the base stations 13a, 13b provided by the interconnection network 17 or interconnection links 21. To this end, the master base station 13a determines the performance parameters L, RTT, rl, ql again (block 62). Depending on the performance parameters L, RTT, rl, ql the master base station 13a decides whether to continue CoMP or not and/or whether to change a configuration of the CoMP. The shown example, the performance parameter relating to the traffic 57 between the master base station 13a and the slave base station 13b on the right hand side of Figure 2 indicate that the quality of transmissions between these two base stations 13a, 13b is not sufficient for performing CoMP. Therefore, the master base station 13a removes this slave base station 13b from the cooperating set s. Then it reconfigures the CoMP in such a way that this slave base station 13b is excluded from the CoMP (section 65). Then CoMP continues with the modified cooperating set c (section 67).

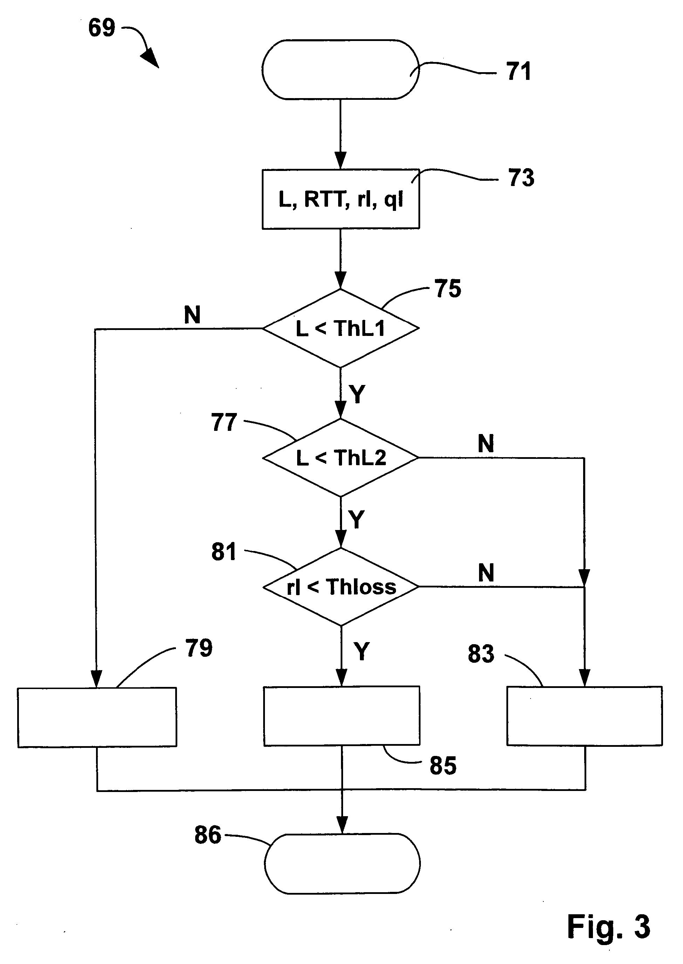

Figure 3 shows a flow chart of a method 69 that may be executed during blocks 59 and 62 for example. After start 71 of the method 69, in a step 73 the performance parameters L, RTT, rl, ql are determined. Then a step 75 decides depending on the performance parameters L, RTT, rl, ql whether at least one of the slave base stations 13b is suitable for performing CoMP. In the shown embodiment, the method 69 goes to a step 77 if the latency L is less than a first critical value ThL1. Otherwise (N) a step 79 is performed that decides not to add the candidate slave base station 13b to the cooperating set s. In another embodiment, in step 75, the round trip time RTT is compared with the first critical value ThL1.

Step 77 decides depending on the performance parameters, preferably depending on the latency L on whether other types of CoMP than coordinated resource allocation can be performed. If the latency L is less than a second critical value ThL2 then (Y) step 81 is executed. Otherwise (N) the method 69 goes to a step 83.

Step 83 adds the candidate slave base station 13b to the cooperating set s and decides that coordinated resource allocation shall be performed.

Step 81 verifies whether performance parameters indicating a load of the interconnection network 17 or the interconnection links 21 is sufficiently low for performing joint processing and/or joint transmission in the downlink or uplink CoMP. In order to estimate the load the loss rate rl and/or the loss ratio ql may be used. For example, the loss rate rl and/or the loss ratio ql may be compared with a further critical value Thloss. If the loss rate rl and/or the loss ratio ql is less than the further critical value Thloss than (Y) a step 85 is executed. Otherwise (N) the method goes to step 83.

Step 85 adds the candidate slave base station 13b to the cooperating set s and decides to use joint processing and/or joint transmission in the downlink and/or to use uplink CoMP.

As shown in Figure 3, step 75 decides whether at least coordinated resource allocation can be performed. Steps 77 and 81 decide whether simultaneous transmission and/or reception can be performed. After steps 79, 83 and 85 the method is terminated in step 86.

The flow chart shown in Figure 3 gives an example on how to decide on whether CoMP shall be used on determining a well-suited CoMP type. In other embodiments a different set of performance parameters may be used. In particular, at least one of the four performance parameters L, RTT, rl and ql can be compared with a critical value. The method 69 may decide depending on a result of this comparison on whether CoMP shall be applied and/or on which type of CoMP shall be used. In addition, further performance parameters may be considered, e.g., performance parameters related to the fixed network interface 31 and/or devices of the interconnection network 17. For example a minimal, mean, and/or maximum queue size of a queue of one or more fixed network interfaces 31 and/or a minimal, mean, and/or maximum queue size of a queue of a device of the interconnection network 17 such as the router 19 can be considered. Furthermore, uplink CoMP and downlink CoMP, e.g., downlink joint processing, often have different data rate requirements. Thus, a different set of critical values to be compared with the performance parameters L, RTT, rl, ql may be provided, e.g., a first set of critical values for deciding on whether uplink CoMP can be performed and a second set of critical values for deciding on whether downlink CoMP, e.g., downlink joint processing, can be performed. The first set and/or the second set may comprise at least one critical value.

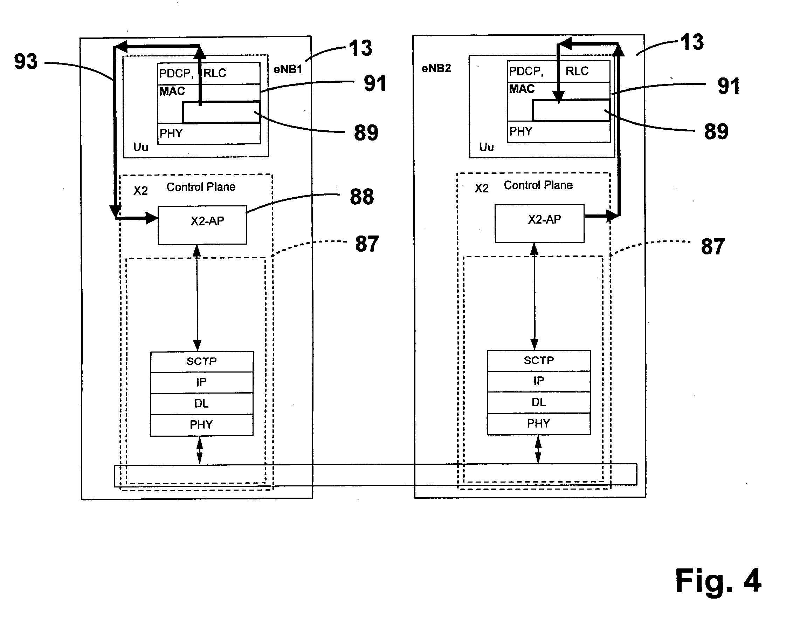

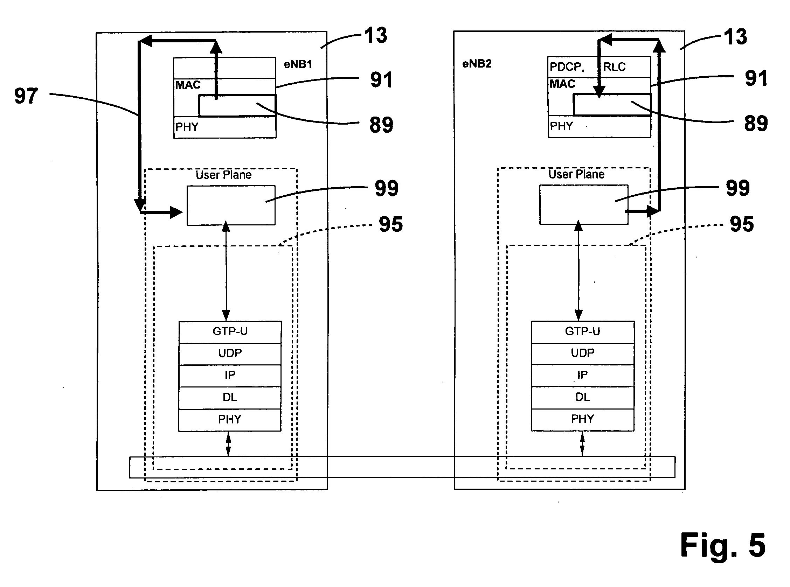

Figures 4 and 5 show the protocol stack used for communication between the base stations 13. As shown in Figure 4, a control plane protocol stack 87 uses the X2 Application Part (X2-AP) protocol for the exchange of signalling message between the master base station 13a and the slave base stations 13b. Protocol data units of X2-AP are transported over the Stream Control Transmission Protocol (SCTP). The SCTP is transported over the Internet Protocol (IP). IP packets are transported over a Data Link layer (DL) protocol, which relies on a Physical Layer (PHY) protocol.

As can been seen in Figure 4, a X2-AP protocol entity 88 may be controlled by a CoMP scheduler 89 that may be part of a Medium Access Control (MAC) entity of further protocol stack 91 used on the radio link between the base stations 13, 13a, 13b and the terminals 15. For instance, the CoMP scheduler 89 may trigger the X2-AP protocol entity to perform measurements for determining the performance parameters L, RTT, rl, ql, preferably parameters L, RTT regarding delays. These parameters allow for estimating the quality of the transmission of signalling messages, i.e., X2-AP protocol data units, over the interconnection network 17 or the interconnection links 21. The triggering of the X2-AP protocol entity is illustrated by an arrow 93.

As shown in Figure 5, a user plane stack 95 for tunnelling payload data between the base stations 13, 13a, 13b comprises a GPRS tunnelling protocol user plane (GTP-U) protocol entity. GTP-U protocol data units are transported over UDP, which is transported over IP, the data link layer (DL) protocol and the physical layer (PHY) protocol.

When triggered by the CoMP scheduler 89 (arrow 97) an entity 99 performs measurements in order to determine the performance parameters L, RTT, rl, ql regarding the user plane stack 95.

In the shown embodiment, the performance parameters L, RTT, rl, ql are determined separately for the control plane protocol stack 87 and for the user plane protocol stack 95. Consequently, two sets of performance parameters L, RTT, rl, ql are obtained. Thus, the service quality of the interconnection network 17 or the interconnection link 21 may be estimated more precisely. In an embodiment, the interconnection network 17 may provide different service classes for the signalling data (control plane) on the one hand and the tunnelled payload data (user plane) on the other hand, e.g. by using DiffServ. In this case, service quality of signalling messages (X2-AP protocol data units) may differ from a service quality of payload data packets (GDP-U protocol data units) transmitted over the interconnection network 17 or the interconnection links 21. In a preferred embodiment, the performance parameter L, RTT related to delays are determined between the MAC protocol entities, e.g., between different CoMP schedulers 89. These parameters L, RTT describe the performance of the interconnection of different base stations 13 in terms of an end-to-end delay between the MAC protocol entities and/or the CoMP schedulers 89. The corresponding measured delays include processing delays in the control plane stack 87 as well as transmission delays of the interconnection network 17 or the interconnection links 21 and processing delays of nodes of the interconnection network 17 such as the router 19. Thus, the performance parameter L, RTT include at least almost the whole delay of the X2 interface.

When using a special test protocol data unit 53 for measuring the delay between two base stations 13, preferably the same DiffServ Code Point (DSCP) may be used for the test protocol data unit 53 like the DSCP used for real signalling messages transmitted over the X2 interface. For measuring a delay in the user plane stack 95 the GTP-U message "Echo Request" may be used. When using this "Echo Request" message or a different test protocol data unit the DSCP may be used that is also used for transmitting tunnelled payload data over GTP.

In an embodiment, an out-of-date indication (e.g., time stamp, sequence number, etc.) may be added to a header of X2-AP protocol data units and/or to GTP-U protocol data units so that outdated data can be discarded before being processed by lower protocol layers of the base station, i.e., the control plane stack 87 or the user plane stack 95. Preferably, to insure an end-to-end out-of-date detection, these headers may be introduced at the highest reasonable protocol layer, e.g., preferably not below the GTP-U layer and/or the X2-AP layer.

In an embodiment, packet losses are detected by analysing sequence numbers of protocol data units transferred over the X2 interface. Depending on the detected packet losses, a congestion situation can be detected and signalled to the base station 13 that has sent the protocol data units comprising the sequence numbers. This allows for the sending base station 13 to detect the congestion situation. In general, preferred approaches for monitoring the interconnection network 17 and/or the interconnection links 21 is time stamping of data and/or control packets, sequence numbering of data and/or control packets, as well as exchanging reporting messages between the base stations 13 in order to report changes of performance parameters L, RTT, rl, ql determined by a particular base station 13. In an embodiment the X2-AP and/or the GTP is extended such that these extended protocols support monitoring of the interconnection network 17 and/or the interconnection link.

In the shown embodiment, the master base station 13a, which controls the terminal 15 and the CoMP, triggers (arrows 93, 97) the measurements for determining the performance parameters L, RTT, rl, ql. In another embodiment, a different base station 13, e.g., a slave base station 13b, may trigger the measurements.

In an embodiment, the base station 13a that has determined the at least one performance parameter L, RTT, rl, ql may transfer the determined performance parameter L, RTT, rl, ql to a different base station 13, preferably to the slave base station 13b that has received or transmitted the traffic to which the performance parameter L, RTT, rl, ql relates. In particular, the master base station 13a may determine the performance parameter L, RTT, rl, ql relating to the traffic between the master base station 13a and a specific slave base station 13b and transfer the determined performance parameter L, RTT, rl, ql to this slave base station 13b. The base station 13b to which the performance parameter L, RTT, rl, ql has been transferred may store the performance parameter L, RTT, rl, ql. If this slave base station 13b is a master base station of a CoMP related to a different terminal 15 then the base station 13b can use the stored performance parameter L, RTT, rl, ql and needs not to trigger a measurement.

To sum up, the embodiments of the present invention described above allow for monitoring the quality of an interconnection between the base stations 13 before performing CoMP and/or during the CoMP. Depending on this monitoring, the base stations 13 involved in the CoMP, in particular the master base station 13a, can determine whether the quality of the interconnection is sufficient to perform the CoMP or a certain type of CoMP. If the quality is not sufficient then a type of CoMP that has comparatively low service quality constraints concerning the interconnection of the base stations 13 may be applied or the CoMP may be disabled completely.

## Claims

1. Method (69) for operating a base station (13a) for coordinated multipoint transmission and/or reception (63) between multiple base stations (13) and a terminal (15) of a wireless communication network (11), said method (69) comprising transmitting traffic (57) to at least one further base station (13b) and/or receiving the traffic (57) from the further base station (13b), wherein the method (69) further comprises determining (59) at least one performance parameter (L, RTT, rl, ql) of said traffic (57).

2. Method (69) according to claim 1, wherein determining (59) the at least one performance parameter comprises measuring a transmission latency (L), a transmission round trip time (RTT), a loss ratio (ql), and/or a loss rate (rl) of protocol data units (53, 55) of said traffic (55).

3. Method (69) according to claim 1 or 2, wherein the method (69) comprises deciding (75) depending on the performance parameter, preferably depending on the transmission latency (L) and/or the round trip time (RTT), whether the further base station (13b) is suitable for coordinated multipoint transmission and/or reception (63).

4. Method (69) according to claim 3, wherein the method (69) comprises deciding (75) depending on the performance parameter, preferably depending on the transmission latency (L) and/or the round trip time (RTT), whether the further base station (13b) is suitable for coordinated resource allocation, preferably coordinated scheduling and/or coordinated beamforming.

5. Method (69) according to claim 3 or 4, wherein the method (69) comprises deciding (77, 81) depending on the performance parameter (L, RTT, rl, ql) whether the further base station (13b) is suitable for simultaneous transmission from the base station (13a) and the further base station (13b) to the terminal (15) or whether the further base station (13b) is suitable for simultaneous reception from the terminal (15) to the base station (13a) and the further base station (13b).

6. Method (69) according to one of the preceding claims, wherein transmitting and/or receiving the traffic (57) comprises transmitting and/or receiving at least one test protocol data unit (53, 55) and wherein the performance parameter (L, RTT, rl, ql) is determined for the transmitted and/or received test protocol data units (53, 55).

7. Method (69) according to one of the precedent claims, wherein the method (69) comprises determining a cooperating set (s) of further base stations (13b) cooperating for said coordinated multipoint transmission (63) by adding a candidate base station (13a) to the cooperating set (s) depending on the performance parameter (L, RTT, rl, ql).

8. Method (69) according to claim 7, wherein the performance parameter (L, RTT, rl, ql) is determined before performing said coordinated multipoint transmission (63) and/or the cooperation set (s) is determined before performing said coordinated multipoint transmission and/or reception (63).

9. Method (69) according to claim 7 or 8, wherein the performance parameter (L, RTT, rl, ql) is determined during said coordinated multipoint transmission (63) and the method (69) comprises removing a further base station (13b) from the cooperating set (s) during said coordinated multipoint transmission (63) depending on the performance parameter (L, RTT, rl, ql).

10. Method (69) according to one of the precedent claims, wherein the traffic (57) is transmitted over an interconnection arrangement, preferably an interconnection network (17) or an interconnection link (21), for interconnecting said multiple base stations (13, 13a, 13b).

11. Method (69) according to one of the precedent claims, wherein the method (69) comprises classifying the traffic (57) into multiple service classes and determining the performance parameter (L, RTT, rl, ql) for at least one service class.

12. Method (69) according to claim 11, wherein the method (69) comprises classifying the test protocol data unit (53, 55) into one of said service classes and wherein the performance parameter (L, RTT, rl, ql) is determined for the transmitted and/or received test protocol data units (53, 55).

13. Method (69) according to one of the precedent claims, wherein the method (69) comprises transferring the at least one determined performance parameter (L, RTT, rl, ql) to the further base station (13b).

14. Base station (13a) of a wireless communication network (11) arranged for coordinated multipoint transmission and/or reception (63) between multiple base stations (13) and a terminal (15) of the wireless communication network (11), said base station (13a) comprising a transmitter (37) for transmitting traffic (57) to at least one further base station (13b) and/or a receiver (27) for receiving the traffic (57) from the further base station (13b), wherein the base station (13a) is arranged for determining at least one performance parameter (L, RTT, rl, ql) of said traffic (57).

15. Base station (13a) according to claim 13, wherein the base station (13a) comprises control circuitry (33) arranged for executing a method (69) according to one of claims 1 to 13.

## Amended claims

### Amended claims in accordance with Rule 137(2) EPC.

**1.** Method (69) for operating a base station (13a) for coordinated multipoint transmission and/or reception (63) between multiple base stations (13) and a terminal (15) of a wireless communication network (11), said method (69) comprising transmitting traffic (57) to at least one further base station (13b) and/or receiving the traffic (57) from the further base station (13b), wherein the method (69) further comprises determining (59) at least one performance parameter (L, RTT, rl, ql) of said traffic (57), **characterized in that** the method (69) comprises deciding (75) depending on the performance parameter whether the further base station (13b) is suitable for coordinated resource allocation, preferably coordinated scheduling and/or coordinated beamforming, whether the further base station (13b) is suitable for simultaneous transmission from the base station (13a) and the further base station (13b) to the terminal (15) or whether the further base station (13b) is suitable for simultaneous reception from the terminal (15) to the base station (13a) and the further base station (13b) .

**2.** Method (69) according to claim 1, wherein determining (59) the at least one performance parameter comprises measuring a transmission latency (L), a transmission round trip time (RTT), a loss ratio (ql), and/or a loss rate (rl) of protocol data units (53, 55) of said traffic (55).

**3.** Method (69) according to claim 1 or claim 2, wherein the at least one performance parameter (L, RTT) related to delays is determined between MAC protocol entities (91) of a protocol stack (91) used on the radio link between the base stations (13, 13a) and the terminal (15).

**4.** Method (69) according to one of the precedent claims, wherein the at least one performance parameter is determined separately for a control plane protocol stack (87) for exchanging signalling messages between the base stations (13, 13a) and a user plane protocol stack (95) for tunnelling payload data between the base stations (13, 13a).

**5.** Method (69) according to one of the preceding claims, wherein transmitting and/or receiving the traffic (57) comprises transmitting and/or receiving at least one test protocol data unit (53, 55) and wherein the performance parameter (L, RTT, rl, ql) is determined for the transmitted and/or received test protocol data units (53, 55).

**6.** Method (69) according to one of the precedent claims, wherein the method (69) comprises determining a cooperating set (s) of further base stations (13b) cooperating for said coordinated multipoint transmission (63) by adding a candidate base station (13a) to the cooperating set (s) depending on the performance parameter (L, RTT, rl, ql).

**7.** Method (69) according to claim 6, wherein the performance parameter (L, RTT, rl, ql) is determined before performing said coordinated multipoint transmission (63) and/or the cooperation set (s) is determined before performing said coordinated multipoint transmission and/or reception (63).

**8.** Method (69) according to claim 6 or 7, wherein the performance parameter (L, RTT, rl, ql) is determined during said coordinated multipoint transmission (63) and the method (69) comprises removing a further base station (13b) from the cooperating set (s) during said coordinated multipoint transmission (63) depending on the performance parameter (L, RTT, rl, ql).

**9.** Method (69) according to one of the precedent claims, wherein the traffic (57) is transmitted over an interconnection arrangement, preferably an interconnection network (17) or an interconnection link (21), for interconnecting said multiple base stations (13, 13a, 13b).

**10.** Method (69) according to one of the precedent claims, wherein the method (69) comprises classifying the traffic (57) into multiple service classes and determining the performance parameter (L, RTT, rl, ql) for at least one service class.

**11.** Method (69) according to claim 10, wherein the method (69) comprises classifying the test protocol data unit (53, 55) into one of said service classes and wherein the performance parameter (L, RTT, rl, ql) is determined for the transmitted and/or received test protocol data units (53, 55).

**12.** Method (69) according to one of the precedent claims, wherein the method (69) comprises transferring the at least one determined performance parameter (L, RTT, rl, ql) to the further base station (13b).

**13.** Base station (13a) of a wireless communication network (11) arranged for coordinated multipoint transmission and/or reception (63) between multiple base stations (13) and a terminal (15) of the wireless communication network (11), said base station (13a) comprising a transmitter (37) for transmitting traffic (57) to at least one further base station (13b) and/or a receiver (27) for receiving the traffic (57) from the further base station (13b), wherein the base station (13a) is arranged for determining at least one performance parameter (L, RTT, rl, ql) of said traffic (57), **characterized in that** the base station (13a) is configured for deciding (75) depending on the performance parameter whether the further base station (13b) is suitable for coordinated resource allocation, preferably coordinated scheduling and/or coordinated beamforming, whether the further base station (13b) is suitable for simultaneous transmission from the base station (13a) and the further base station (13b) to the terminal (15) or whether the further base station (13b) is suitable for simultaneous reception from the terminal (15) to the base station (13a) and the further base station (13b).

**14.** Base station (13a) according to claim 13, wherein the base station (13a) comprises control circuitry (33) arranged for executing a method (69) according to one of claims 1 to 13.
